# EUROPÄISCHE PATENTANMELDUNG

(11) **EP 3 225 304 A1**
(43) Veröffentlichungstag der Anmeldung: **04.10.2017**
(21) Anmeldenummer: 16163271.6
(22) Anmeldetag: 31.03.2016
(51) Int. Cl.: B01J 19/32

(54) **KONTAKTER**

(71) Anmelder: Hirschberg Engineering, 8408 Winterthur (CH)
(72) Erfinder: Hirschberg, Sebastian, 8408 Winterthur (CH)
(74) Vertreter: Spillmann, Hannes

(57) **Zusammenfassung**

Eine Vorrichtung umfasst eine Struktur (100.0) zur Führung eines ersten Fluids, wobei die Struktur (100.0) weiter eine Grenzfläche zum Führen eines zweiten Fluids aufweist, wobei an der Grenzfläche der Struktur das erste Fluid mit dem zweiten Fluid in Kontakt gebracht werden kann. An der Grenzfläche der Struktur (100.0) ist mindestens ein Strömungsbrecher (120.0) zum Brechen einer Strömung des zweiten Fluids angeordnet.

## Beschreibung

### Technisches Gebiet

Die Erfindung betrifft eine Vorrichtung, insbesondere ein Kontakter zum Kontaktieren von wenigstens zwei Fluidströmen, umfassend eine Struktur zur Führung eines ersten Fluids, wobei die Struktur weiter eine Kontaktzone aufweist, wobei die Kontaktzone zum Führen eines zweiten Fluids ausgelegt ist und aufweist, wobei in der Kontaktzone das erste Fluid mit dem zweiten Fluid in Kontakt gebracht werden kann. Weiter betrifft die Erfindung eine Anordnung umfassend mindestens eine Vorrichtung sowie ein Verfahren zur Herstellung eines Kontaktes zwischen einem ersten und einem zweiten Fluid.

### Stand der Technik

In der Verfahrenstechnik werden bei verschiedenen Verfahrensschritten unterschiedliche Fluidströme miteinander in Kontakt gebracht. Durch das gezielte Kontaktieren der Ströme werden Stoff- und Energieaustausch zwischen den Fluidströmen oder chemische Reaktionen ermöglicht. Bei den Fluidströmen kann es sich um zwei nicht mischbare Flüssigkeiten oder ein gasförmiges Fluid und eine Flüssigkeit handeln. Für die Kontaktierung werden verschiedene Techniken angewendet. Einerseits kann ein Fluidstrom im Anderen dispergiert resp. zerstäubt werden um eine grosse Oberfläche zwischen den Fluiden zu erzeugen. Typischerweise werden die beiden Fluide in einem späteren Schritt dann wieder getrennt. Die beiden Fluide können ausserdem im Gleichstrom durch ein Gefäss geleitet werden, in dessen Innern grosse Oberflächen für die Kontaktierung der Fluidströme bereitgestellt werden. Beispiele für derartige Geräte sind Füllkörperkolonnen oder Kolonnen mit strukturierten Packungen. Besonders effizient sind Verfahren, bei denen die zu kontaktierenden Fluidströme im Gegenstrom geleitet werden. Beispiele für derartige Geräte sind Bodenkolonnen, Füllkörperkolonnen, Kolonnen mit strukturierten Packungen, Fallfilmverdampfer, Dünnfilmverdampfer und mehr. Für einige Prozesse können auch Kreuzstrom-Kontakter eingesetzt werden. Bei Kreuzstrom-Kontakter fliessen die beiden Fluidströme weder in dieselbe Richtung, wie beim Gleichstrom, noch in entgegengesetzte Richtungen, wie beim Gegenstrom, sondern kreuzen sich und führen während des Kreuzens einen Stoffaustausch durch. Beispiele sind Kreuzstrom-Filmverdampfer oder Gaswäscher, bei denen eine Flüssigkeit als Film schwerkraftgetrieben auf der Oberfläche von Füllkörpern oder strukturierten Einbauten nach unten fliesst, während ein Dampf- oder Gasstrom in einer, von der Strömungsrichtung der Flüssigkeit abweichenden Richtung durch die Struktur fliesst und dort mit dem Film kontaktiert wird.

Für eine grosstechnische Umsetzung hat es sich aus Kostengründen bewährt, die Gegen- oder Kreuzstromkontaktierung rein mit Hilfe der Gravitation durchzuführen. Dabei ergibt sich aber eine Beschränkung des erreichbaren Durchsatzes, da sich die kontaktierenden Fluide gegenseitig mitreissen. Bei der Gegenstromkontaktierung werden deswegen ab einem gewissen Durchsatz die Kräfte zwischen den Fluidströmen grösser als die Gravitation, die die schwerere der beiden Phasen im Gerät nach unten treiben soll. Sobald die Kräfte zwischen den Phasen grösser werden als die Gravitation treten Fluten ein. Die schwerere Phase kann ab dem Flutpunkt nicht mehr durch das Gerät nach unten fliessen, sondern wird von der leichteren Phase nach oben mitgerissen. Beim Kreuzstrom wird der Flüssigkeitsfilm mit dem ihn kreuzenden Fluidstrom mitgerissen. Bei der Kreuzstromkontaktierung lässt sich der Prozess durch das Mitreissen der Flüssigkeit weniger gut kontrollieren und das Auffangen der überschüssigen Flüssigkeitsphase im Film respektive das Trennen der beiden Ströme werden erschwert.

Eine Klasse derartiger Fluid-Fluid Kontaktier-Verfahren ist die Destillation. Hier wird typischerweise gezielt ein Stoffaustausch zwischen einer Flüssigkeit und einem Gasstrom im Gegenstrom erzeugt. Bei der Destillation in strukturierten Packungen hat sich herausgestellt, dass typischerweise ein natürliches Limit bei einem Druckabfall des Gasstroms von ungefähr 10 - 12 mbar/m existiert. Prozesspunkte mit grösserem Druckabfall im nach oben gerichteten Gasstrom sind daher häufig nicht möglich, da die Kolonne dann normalerweise flutet.

Die gegenwärtig bekannten Kontakter haben den Nachteil, dass sie aufgrund der Tendenz zum Fluten lediglich einen begrenzten Stoffumsatz zulassen.

### Darstellung der Erfindung

Aufgabe der Erfindung ist es, eine dem eingangs genannten technischen Gebiet zugehörende Vorrichtung zu schaffen, mit welcher zwei Fluide in Kontakt gebracht werden können, wobei ein Risiko der Flutung respektive des Mittreissens eines Fluids vermindert wird. Dies insbesondere so, dass ein intensiver Stoffaustausch zwischen den zu verarbeiteten Fluiden bei sehr grossen Durchflussraten der beiden Fluide erreicht werden kann und das Gerät für den Stoffaustausch so kompakter gebaut werden kann.

Die Lösung der Aufgabe ist durch die Merkmale des Anspruchs 1 definiert. Gemäss der Erfindung ist in der Kontaktzone mindestens ein Strömungsbrecher zum Brechen einer Strömung des zweiten Fluids angeordnet.

Die Vorrichtung wird damit eingesetzt, um in einem Verfahren einen Kontakt zwischen einem ersten Fluid und einem zweiten Fluid herzustellen.

Vorzugsweise ist die Strömungsgeschwindigkeit des zweiten Fluids derart gewählt, dass ein Fluten ausbleibt. Die Ausbildung des Strömungsbrechers in der Kontaktzone der Struktur hat unter anderem den Effekt, dass das Flutungs-Phänomen beim Gegenstrom respektive das Mitreissen der Flüssigkeit im Film im Kreuzstrom vermieden werden kann. Insbesondere wird in beiden Fällen das erste Fluid in der Struktur zur Führung des ersten Fluids, im Besonderen in Poren und/oder Kapillaren der Struktur, geführt, so dass es die Struktur zur Führung des ersten Fluids benetzt. Das zweite Fluid strömt entlang der Kontaktzone, insbesondere durch Bereiche der Vorrichtung, die ausserhalb der Struktur zur Führung des ersten Fluids liegen und im Besonderen keine Poren und/oder Kapillaren der Struktur aufweisen, so dass es die Struktur zur Führung des ersten Fluids kaum oder gar nicht benetzt. Damit wird eine besonders effiziente Vorrichtung zu Kontaktierung eines ersten Fluids mit einem zweiten Fluid geschaffen. Insbesondere kann mit der erfindungsgemässen Vorrichtung ein erstes Fluid mit einem zweiten Fluid derart in Kontakt gebracht werden, ohne dass es zu einer Dispergierung des ersten Fluids im zweiten Fluid oder umgekehrt kommt. Damit wird weiter ein besonders intensiver Kontakt zwischen dem ersten Fluid und dem zweiten Fluid an der Grenzfläche erreicht.

In Varianten kann die Strömungsgeschwindigkeit derart gewählt sein, dass ein Risiko des Flutens lediglich vermindert wird.

Die **Struktur** kann grundsätzlich beliebig ausgebildet sein. Das einzige Erfordernis an die Struktur besteht darin, dass ein Fluid von einem ersten Ende der Struktur zu einem zweiten Ende der Struktur geführt werden kann. Das erste Fluid muss dabei nicht zwingend geradlinig, sondern kann auch entlang einer beliebigen Bahn durch die Struktur geführt sein.

Die **Kontaktzone** ist insbesondere ein Bereich einer Oberfläche, einer Umhüllungsfläche und/oder einer Begrenzungsfläche der Struktur zur Führung des ersten Fluids. Die Kontaktzone wird insbesondere im Wesentlichen durch die Geometrie der Struktur zur Führung des ersten Fluids, im Besonderen durch die Geometrie der äusseren Begrenzung und/oder einer umhüllenden Fläche der Struktur zur Führung des ersten Fluids, definiert. Die Kontaktzone liegt im Besonderen ausserhalb der Struktur zur Führung des ersten Fluids und weist insbesondere keine Poren und/oder Kapillaren auf. Die Kontaktzone ist derart ausgebildet, dass das erste Fluid, welches innerhalb der Struktur zur Führung des ersten Fluids strömt, in der Kontaktzone mit dem zweiten Fluid, welches ausserhalb der Struktur zur Führung des ersten Fluids strömt, in Kontakt treten kann.

In der Kontaktzone bildet sich bei Verwendung der erfindungsgemässen Vorrichtung eine **Grenzfläche** zwischen dem ersten Fluid und dem zweiten Fluid. Dabei handelt es sich mit anderen Worten um eine Phasentrennfläche zwischen den beiden Fluiden. Die Grenzfläche ist daher nicht zwingend als eine geometrisch erkennbare Fläche an der Struktur zur Führung des ersten Fluids zu verstehen. Insbesondere ist die Grenzfläche nicht zwingend identisch mit der Oberfläche, der Umhüllungsfläche und/oder der Begrenzungsfläche der Struktur zur Führung des ersten Fluids. Je nach eingesetzten Fluiden kann die Grenzfläche zwischen den Fluiden variieren und beispielsweise oberhalb der Oberfläche, der Umhüllungsfläche und/oder der Begrenzungsfläche der Struktur zur Führung des ersten Fluids liegen. Die Form und Position der Grenzfläche hängt insbesondere von den eingesetzten Fluiden, vom Strömungszustand und/oder den Druckverteilungen in der Strömung der beiden Fluide ab. Durch Wellenphänomene und/oder wenn in einen Bereich der Struktur über eine gewisse Zeit mehr Flüssigkeit hineinfliesst als abfliesst, kann die Form und die Position der Grenzfläche sich auch dynamisch mit der Zeit verändern. Im Speziellen handelt es sich bei der Grenzfläche um eine gekrümmte und/oder bauchige Fläche, welche insbesondere durch den mindestens einen Strömungsbrecher unterbrochen und/oder begrenzt wird.

Grundsätzlich kann das **erste Fluid und/oder das zweite Fluid** als beliebiger fliessfähiger Stoff vorliegen, insbesondere als Flüssigkeit, Dampf, Aerosol, Schaum etc. Dies unter der Voraussetzung, dass die beiden Fluide nicht homogen miteinander mischbar sind. Unter einer "homogenen Mischung" wird vorliegend eine Mischung aus zwei Fluiden verstanden, welche auf molekularer Ebene vermischt sind und sich in einer Phase befinden, also optisch nicht als Mischung erkennbar sind.

Vorzugsweise handelt es sich beim ersten Fluid um eine Flüssigkeit, insbesondere bei einer Verwendung der Vorrichtung in einer Extraktion. Insbesondere bei einer Destillation oder einer Gaswäsche kann es sich beim ersten Fluid aber auch um ein Gas handeln.

Beim zweiten Fluid handelt es sich vorzugsweise um ein Gas. In Varianten kann es sich aber auch um eine Flüssigkeit handeln. Das erste und das zweite Fluid liegen aber nicht gleichzeitig als Gase vor.

Beim **Strömungsbrecher** handelt es sich vorzugsweise um ein Element, welches die Strömung des zweiten Fluids beeinflussen kann. Unter dem Begriff "brechen der Strömung" ist allgemein ein Verändern des Strömungsverhaltens zu verstehen. Diese Veränderung kann als abbremsen der Fliessgeschwindigkeit, ein Umlenken des Fluidstromes und dergleichen umfassen.

Aufzählungen mit dem Term **"und/oder"** sind grundsätzlich dahingehend zu interpretieren, dass eine nichtleere Teilmenge der aufgezählten Merkmale gewählt werden kann.

Besonders bevorzugt wird im Verfahren die Strömungsrichtung des zweiten Fluids durch den mindestens einen Strömungsbrecher lokal gezielt verändert, insbesondere lokal umgekehrt. Insbesondere wird dabei wenigstens ein definierter lokaler Wirbel im zweiten Fluid erzeugt. Damit kann insbesondere lokal eine Gleichstromkontaktierung zwischen dem ersten Fluid und dem zweiten Fluid erreicht werden.

In Varianten kann die Vorrichtung auch derart betrieben sein, dass eine Verwirbelung ausbleibt. Stattdessen kann die Vorrichtung zum Beispiel derart betrieben sein, dass lediglich ein Abbremsen des zweiten Fluids erfolgt.

Vorzugsweise sind die Struktur, die Kontaktzone und/oder die Grenzfläche derart ausgebildet, dass in den jeweiligen Fluiden jeweils eine gute Durchmischung erreicht wird. Damit wird erreicht, dass stets frisches Fluid im Kontaktbereich zur Verfügung steht.

Vorzugsweise umfasst der Strömungsbrecher mindestens zwei Leisten, wobei das zweite Fluid insbesondere in eine zweite Richtung strömen kann, welche die Leistenrichtung kreuzt. Unter dem Begriff Leiste wird ein im Wesentlichen prismatisches Element verstanden. Bevorzugt handelt es sich um eine Quaderform, insbesondere um eine längliche Quaderform. In einer bevorzugten Ausführungsform ist die Leiste mit der Struktur einstückig ausgebildet, die Vorrichtung kann aber in Varianten auch aus Leisten und Struktur zusammengesetzt sein. Weiter kann die Leiste zum Beispiel prismatisch mit einem nicht rechteckigen Querschnitt ausgebildet sein. Insbesondere kann die Leiste auch einen dreieckigen Querschnitt aufweisen.

In Varianten kann der Strombrecher auch anderweitig ausgebildet sein. Zum Beispiel kann der Strombrecher wellenlinienförmig, zickzackförmig, mäanderförmig oder ähnlich ausgebildet sein. Dem Fachmann sind weitere mögliche Ausbildungen eines Strombrechers bekannt.

Das Flutungs-Phänomen im Gegenstrom respektive das Mitreissen im Kreuzstrom wird damit vorzugsweise durch ein System von Leisten verhindert, die entlang der Grenzfläche zwischen den beiden Strömungsrichtungen des ersten Fluids und des zweiten Fluids angeordnet sind. Die Leisten sind vorzugsweise ungefähr senkrecht zur Bewegungsrichtung des zweiten Fluids ausgerichtet, das die Struktur vorzugsweise im Wesentlichen nicht benetzt. In der Praxis hat sich gezeigt, dass die Leisten besonders bevorzugt mit der Strömungsrichtung des zweiten Fluids einen Winkel im Bereich von 70° bis 90° einschliesst. In besonderen Ausführungen kann der Winkel aber auch kleiner als 70° sein.

Vorzugsweise liegt ein Verhältnis eines Abstandes zwischen zwei benachbarten Leisten und der Höhe der Leiste in einem Bereich von 1 bis 10, besonders bevorzugt zwischen 3 und 7. Das heisst, der Abstand zwischen zwei benachbarten Leisten ist bevorzugt 1 bis 10 mal grösser, besonders bevorzugt 3 bis 7 mal grösser, als die Höhe der Leisten selbst. Mit Versuchen konnte aufgezeigt werden, dass bei zu geringen Abständen zwischen zwei benachbarten Leisten typischerweise der Kontakt zwischen dem ersten Fluid und dem zweiten Fluid nicht hinreichend gewährleistet werden kann. Anderseits kann bei zu grossen Abständen die Wirkung der Leisten selbst als Strombrecher zu gering ausfallen, womit ein Fluten wieder eher eintritt. Der obig erwähnte Bereich von einem Faktor zwischen 1 und 10 und besonders bevorzugt zwischen 3 und 7 hängt aber auch von den eingesetzten Fluiden, sowie der Grössenordnung der Vorrichtung selbst, den Fliessgeschwindigkeiten, den Volumenströmen etc. ab. Dem Fachmann ist daher klar, dass der Faktor auch über 10 oder unter 1 liegen kann.

Durch eine geeignete Dimensionierung der Höhe der Leisten sowie der Abstände zwischen den benachbarten Leisten kann die Strömung zwischen den Leisten gezielt eingestellt werden. Es hat sich überraschenderweise in zahlreichen Versuchen herausgestellt, dass durch die geeignete Wahl dieser Dimensionen, insbesondere dem oben erwähnten Verhältnis zwischen Leistenhöhe und Leistenabstand, der Stoffaustausch zwischen dem ersten Fluid und dem zweiten Fluid gegenüber der Situation ohne Leisten erhöht werden kann, obschon die Geschwindigkeit zwischen den Phasen an der Grenzfläche typischerweise reduziert wird.

Durch dieses Prinzip lassen sich Strukturen erzeugen, in deren Innern die beiden Fluidströme des ersten Fluids und des zweiten Fluids sehr grosse spezifische Phasentrennflächen in der Kontaktzone bilden und die trotzdem mit sehr grossen Geschwindigkeiten durchströmt werden können. Insbesondere bei Gegenstromanwendungen können so die Geschwindigkeiten der beiden zu kontaktierenden Fluide wesentlich erhöht werden und deswegen deutlich kompaktere Vorrichtungen gebaut werden. So kann z.B. bei Destillationskolonnen die maximale Kapazität einer Struktur um einen Faktor 5 oder mehr erhöht werden, bei gleichzeitig ausgezeichneter Austauschleistung zwischen den Phasen. Obwohl bei derartigem Betrieb der Druckverlust beträchtlich werden kann, deutlich höher als die 10-12 mbar/m, die beim Stand der Technik das Limit bilden, tritt kein Fluten auf. Durch eine geeignete Dimensionierung der Struktur kann gleichzeitig auch der Durchsatz des ersten Fluids in weiten Bereichen angepasst werden. Damit kann gegenüber dem Stand der Technik und bei geeigneter Wahl der Parameter einen Sprung in der Leistung von Stoffaustauschsystemen wie Destillationskolonnen, Extraktionskolonnen, Gaswäscher etc. erreicht werden.

Vorzugsweise ist die Struktur derart beschaffen und die Strömungsbrecher sind derart angeordnet, dass das erste Fluid in eine erste Richtung strömen kann, welche den Strömungsbrecher kreuzt. Damit wird erreicht, dass das erste Fluid insbesondere nicht parallel zur Richtung des Strömungsbrechers respektive der Leistenrichtung strömt. Somit kann mit dem ersten Fluid eine gute Kontaktierung des zweiten Fluids erreicht werden, da damit das erste Fluid nicht teilweise hinter den Strömungsbrecher respektive Leisten geführt ist.

In Varianten kann die Struktur derart beschaffen sein, dass das parallel zu den Leisten geführte erste Fluid nicht hinter den Leisten geführt ist. Dies kann mit geeigneten Kanälen, Kapillaren und dergleichen erreicht werden. Weiter kann in einer Ausführungsform ein Kreuzstrom vorgesehen sein, wobei das erste Fluid rechtwinklig und das zweite Fluid parallel zu den Leisten geführt ist.

Bei der Gegenstromkontaktierung können die Leisten zum Beispiel etwa horizontal angeordnet sein. Beim Kreuzstrom können die Leisten ungefähr vertikal angeordnet sein, da das zweite Fluid, welches die Struktur kaum oder nicht benetzt im Kreuzstrom typischerweise ungefähr horizontal fliesst. Bei geeigneter Dimensionierung der Leisten kann die Geschwindigkeit zwischen den Phasen an der Kontaktfläche wesentlich reduziert werden, so dass ein Mitreissen weitgehend vermieden werden kann.

Die Leisten können ausserdem in einer bevorzugten Ausführungsform so dimensioniert werden, dass sich zwischen ihnen definierte Wirbel ausbilden. Dadurch kann die Strömungsgeschwindigkeit vom zweiten Fluid reduziert werden respektive die Strömungsrichtung wird in eine andere Richtung gedreht. Bei Leisten, welche genau senkrecht zur Strömungsrichtung vom zweiten Fluid ausgerichtet sind, kann unter Umständen die Strömungsrichtung entlang der Kontaktfläche durch die Wirbel sogar komplett umgedreht werden. So kann bei einem Gegenstrom-Kontakter genau dort, wo die beiden Phasen im direkten Kontakt sind, lokal ein Gleichstrom-Kontakter erzeugt werden. Dies ist von besonderem Vorteil, da bei einem Gleichstromkontakter typischerweise kein Fluten auftritt.

Vorzugsweise schliesst die erste Richtung mit der Leistenrichtung einen Winkel von 60° bis 90°, insbesondere einen Winkel von 75° bis 90°, vorzugsweise einen Winkel von 80° bis 90° ein. Damit wird eine besonders optimale Kontaktierung der beiden Fluide erreicht.

Alternativ kann der Winkel auch in einem anderen Bereich, insbesondere unter 60° liegen.

In einer bevorzugten Ausführungsform des Verfahrens wird die Struktur durch das erste Fluid benetzt, während insbesondere das zweite Fluid die Oberfläche der Struktur nicht oder weniger benetzt.

In Varianten kann der Durchsatz der beiden Fluide auch durch eine konkrete Wahl der Struktur eingestellt werden, zum Beispiel über eine Porengrösse der Struktur in Abhängigkeit der Viskosität des Fluids. Weiter können statt der Wahl der Benetzbarkeit der Fluide respektive zusätzlich zu dieser Wahl an den Leisten ein Absatz, ein Kragen und/oder eine Oberflächenstrukturierung vorgesehen sein.

Die Führung der Fluide durch die Struktur und die Kontaktzone kann weiter durch die Wahl der Benetzbarkeit der Leisten gesteuert werden. Besonders bevorzugt umfasst dazu die Leiste einen zur Struktur proximalen Bereich, welcher eine erste Benetzbarkeit aufweist, sowie einen zur Struktur distalen Bereich, welcher eine zur ersten Benetzbarkeit unterschiedliche, zweite Benetzbarkeit aufweist. Durch einen derartigen Aufbau der Leiste kann verhindert werden, dass das erste Fluid in den äusseren Bereich der Leiste gelangt und dort vom zweiten Fluid mitgerissen wird. Damit kann das Verfahren auch mit ersten und zweiten Fluiden durchgeführt werden, welche eine ähnliche oder gleiche Benetzbarkeit respektive Polarität aufweisen.

In einer Ausführungsform kann die Struktur aus einem hydrophilen Material, insbesondere aus einer hydrophilen Keramik, z.B. Aluminiumoxid, Zirkonoxid und/oder Titanoxid, bestehen und kann damit für polare Substanzen sehr gut benetzbar sein. Die Leisten können in einem inneren Abschnitt, das heisst in Richtung der Struktur ebenfalls aus einem hydrophilen Material, insbesondere aus einer hydrophilen Keramik, z.B. Aluminiumoxid Zirkonoxid und/oder Titanoxid, und aussen aus einem hyrophoberen Material, insbesondere einem keramischen Material, das seltene Erden enthält, bestehen. Besonders geeignet als hyrophoberes Material ist z.B. Cerium-Dioxid. Dem Fachmann sind auch weitere geeignete Materialien respektive Beschichtungen bekannt. Unter einer hydrophilen Keramik wir insbesondere eine Keramik verstanden, welche in Bezug auf Wasser einen Kontaktwinkel von < 10° aufweist. Als hydrophob werden Kontaktwinkel von > 85° angesehen.

Auch hier können statt oder zusätzlich zu der Wahl der Benetzbarkeit der Bereiche der Leisten an den Leisten ein Absatz, ein Kragen und/oder eine Oberflächenstrukturierung vorgesehen sein.

Vorzugsweise umfasst die Struktur ein oder mehrere der folgenden Merkmale:
a) ein Gewebe;
b) ein offenporiges Material, insbesondere ein Schaum;
c) Kapillaren;
d) Treppenstruktur.

Besonders bevorzugt weist die Struktur Kapillaren auf. Die Struktur kann dazu eine Treppenstruktur aufweisen, ein Gewebe, ein offenporiges Material oder einen Schaum umfassen etc. Insbesondere die Treppenstruktur hat sich in der Praxis als besonders vorteilhaft herausgestellt.

In Varianten kann die Struktur aber auch andere respektive zusätzliche Merkmale aufweisen.

Ein mittlerer Durchmesser von Kapillaren, von Freiräumen in der Treppenstruktur und/oder von Poren beträgt mit Vorteil 50 Mikrometer bis 5 Millimeter, insbesondere 100 Mikrometer bis 2 Millimeter, speziell 200 Mikrometer bis 1 Millimeter. Der Durchmesser wird dabei im Besonderen senkrecht zu einer Längsrichtung der jeweiligen Struktur gemessen.

Die Leisten sind bevorzugt auf der Seite der Kapillaren der Struktur durch das erste Fluid gut benetzbar und sind im Betrieb vorzugsweise auch benetzt. Damit kann der Druckunterschied durch die Kapillarkräfte ausgeglichen werden. An der entgegengesetzten Seite, die die Kapillaren nicht berührt, sind die Leisten von Vorteil so ausgeführt, dass sie durch das erste Fluid möglichst nicht oder nur schlecht benetzt werden können. Das kann zum Beispiel dadurch erreicht werden, dass auf der Oberfläche der Leisten in diesem Bereich eine geeignete Oberflächenstruktur erzeugt wird, die Oberflächen der Leisten in diesem Bereich geeignet beschichtet werden oder indem die Leisten in diesem Bereich durch ein Material gebildet werden, das durch das erste Fluid nur schlecht benetzt werden kann. Aufgrund der typischerweise geringen Abmessungen der hier beschriebenen Strukturen und deren ebenfalls typischerweise komplexer dreidimensionaler Struktur hat sich die Materialwahl für die Leisten als besonders vorteilhaft herausgestellt.

Falls das erste Fluid nicht parallel zu den Leisten fliesst, muss sie unter den Leisten hindurchfliessen können. Dies kann auf unterschiedliche Weisen erreicht werden. Zum Beispiel können Kapillaren gebildet werden, die unter den Leisten hindurchführen. Dabei können die Kapillaren mit Vorteil so dimensioniert werden, dass durch die Kapillarkräfte die Druckunterschiede zwischen dem Bereich vor einer Leiste und dem Bereich hinter einer Leiste ausgeglichen werden können. Die Kapillaren sollten aber gleichzeitig auch nicht zu klein bemessen sein, da in sehr kleinen Kapillaren aufgrund der Reibung die Fluidgeschwindigkeit zu gering werden kann. Die Kapillaren sind daher bevorzugt auf die beiden Fluide sowie auf die weiteren Prozessparameter der Vorrichtung, wie zum Beispiel Temperatur, Durchflussgeschwindigkeit, Volumenstrom etc., angepasst.

Die Kapillarstruktur, die die Flüssigkeit führt, kann als eine Reihe parallel angeordneter Ebenen ausgeführt sein, die durch Stege miteinander verbunden sind. Sie kann aber auch monolithisch als Wabenkörper mit unterschiedlichen Wabenformen (Dreieck, Rechteck, Quadrat, Sechseck) ausgeführt werden. Die Leisten können entweder genau senkrecht zur Strömungsrichtung des zweiten Fluids ausgerichtet werden. Speziell bei der Version mit dem Körper, der aus mehreren parallel angeordneten Ebenen besteht können die Leisten aber auch mit einem kleinen Winkel gegenüber der Senkrechten zur Strömungsrichtung vom zweiten Fluid angeordnet werden. Dadurch wird in die Strömung des zweiten Fluids eine Zirkulationsbewegung induziert, die eine zusätzliche Vermischung des zweiten Fluids bewirkt.

Die Kapillaren, in denen das erste Fluid fliesst, können vorteilhafterweise durch sich kreuzende Treppenstege realisiert werden, wie sie in der Anmeldung EP2897783 beschrieben sind. Dadurch kann sichergestellt werden, dass die Flüssigkeit in den Kapillaren der Struktur während des Stoffaustauschs intensiv durchmischt wird und dadurch der Stoffaustausch intensiviert wird. Die Kapillaren können aber auch zufällig angeordnet sein, und z.B. durch offenporige Schaumstrukturen gebildet werden, die aus Kunststoffen, Metallen oder Keramiken kommerziell erhältlich sind. Denkbar wären auch andere Aufbauten der Kapillarstruktur, z.B. mittels Gewebe oder anderen porösen Materialien.

Bevorzugt ist die Struktur wabenförmig ausgebildet, wobei die Strömungsbrecher in den Waben radial nach innen ragen. Besonders bevorzugt weisen mehrere Vorrichtungen in Kombination eine gemeinsame Grenzfläche auf, welche einen polygonalen Kanal zum Führen des zweiten Fluids bilden. Die Wabenstruktur ist besonders einfach aufgebaut und damit auch kostengünstig herstellbar.

In Varianten können beliebig andere Formen der Struktur vorgesehen sein (siehe weiter unten).

Bevorzugt weisen die Waben einen Querschnitt der Form eines regelmässigen Vielecks auf, insbesondere eines Dreiecks, eines Vierecks oder eines Sechsecks. Diese Ausbildungen haben den Vorteil, dass einzelne Vorrichtungen als Monolithe besonders einfach zu Anordnungen mit mehreren Monolithen aufgebaut werden können.

In Varianten können auch andere Querschnitte vorgesehen sein.

Besonders bevorzugt umfasst die Struktur Treppenstegelemente. Der Einsatz von Treppenstegen ist insbesondere vorteilhaft bei einem schichtweisen Aufbau der Struktur, da damit für einen Treppentritt eine Schicht ausgebildet werden kann. Weiter weist die Treppenform den Vorteil auf, dass das erste Fluid beim Überströmen in sich gemischt wird.

In Varianten können die Struktur statt der Treppenstegelementen auch glatte Rampen umfassen.

Vorzugsweise umfasst die Struktur mehrere kreuzförmig angeordnete Treppenstegelemente. Damit wird erreicht, dass das erste Fluid in der Struktur eine Vielzahl von Richtungswechsel durchlaufen muss, womit wiederum die Durchmischung verbessert werden kann.

Auch hier können als Variante kreuzförmig angeordnete glatte Rampen vorgesehen sein.

Insbesondere in der Ausführungsform mit Kapillaren, in denen das erste Fluid fliesst, können vorteilhafterweise durch sich kreuzende Treppenstege realisiert werden, wie sie in der Anmeldung EP 2 897 783 A1 beschrieben sind. Dadurch kann sichergestellt werden, dass die Flüssigkeit in den Kapillaren der Struktur während des Stoffaustauschs intensiv durchmischt wird und dadurch der Stoffaustausch intensiviert wird.

In Varianten können die Kapillaren aber auch zufällig angeordnet sein, und z.B. durch offenporige Schaumstrukturen gebildet sein, welche aus Kunststoffen, Metallen oder Keramiken gebildet sind. Denkbar wären auch andere Aufbauten der Kapillarstruktur, z.B. mittels Gewebe oder anderen porösen Materialien.

Eine Anordnung umfasst vorzugsweise eine Vorrichtung umfassend eine Struktur und einen Strömungsbrecher, wobei an einem ersten Ende der Vorrichtung ein Verteiler zum Verteilen des ersten Fluids in die Struktur angeordnet ist und an einem zweiten, dem ersten gegenüberliegenden Ende, ein Kollektor zum Sammeln des ersten Fluids aus der Struktur angeordnet ist. Damit wird quasi die Struktur in Fluidverbindung zwischen dem Verteiler und dem Kollektor zwischen geschaltet, so dass die Struktur besonders einfach gespiesen werden kann. Der Verteiler und der Kollektor können jeweils eine oder mehr Zurespektive Ableitung für das erste Fluid aufweisen. Besonders bevorzugt weisen der Verteiler und der Kollektor aber genau eine Zu- respektive Ableitung auf.

In Varianten kann auf einen Verteiler und/oder einen Kollektor auch verzichtet werden. In diesem Fall kann die Struktur zum Beispiel am ersten Ende direkt mit dem ersten Fluid beaufschlagt werden. Weiter können mehrere Vorrichtungen derart verbunden werden, dass das erste Fluid durch Strukturen der mehreren Vorrichtungen geführt werden kann (siehe unten) und wobei eine Vorrichtung eines ersten Endes einen Verteiler und eine Vorrichtung eines zweiten Endes einen Kollektor aufweist. Je nach Ausbildung der Vorrichtungen müssen sich der Kollektor und der Verteiler auch nicht zwingend bezüglich der Fliessrichtung des ersten Fluids gegenüberstehen. Schliesslich können der Verteiler und der Kollektor auch integrale Bestandteile der Vorrichtung sein und insbesondere Einstückig damit verbunden sein.

Damit das erste Fluid, insbesondere bei Hochleistungs-Gegenstrom-Kontaktern, zuverlässig eingeleitet und gleichmässig verteilt werden kann und am unteren Ende auch wieder aus der Struktur herausgeführt werden kann, ist am oberen Ende der Struktur vorzugsweise ein auf die Struktur abgestimmter Verteiler zur Verteilung des ersten Fluids in die Struktur angebracht, insbesondere zur Verteilung einer Flüssigkeit. Am gegenüberliegenden Ende der Struktur ist vorzugsweise mindestens ein entsprechender Flüssigkeitskollektor angebracht.

Dieser Verteiler, insbesondere zum Beispiel ein Flüssigkeitsverteiler und der Kollektor, insbesondere der Flüssigkeitskollektor, können zum Beispiel direkt mit demselben schon erwähnten Herstellverfahren zum Schichtenweisen Aufbau von Strukturen generiert werden, mit der auch die Vorrichtung hergestellt werden kann. Weiter können der Verteiler und der Kollektor auch fest mit der Struktur des Kontakters, insbesondere einstückig ausgebildet respektive hergestellt sein.

Ist das Fluid respektive die Flüssigkeit einmal gleichmässig in der Struktur verteilt, besteht typischerweise nur noch geringe oder keine Gefahr mehr, dass sich Fluid- respektive Flüssigkeits-Maldistributionen (ungleiche Mengenströme über den Strömungsquerschnitt) ausbilden können. Im Gegensatz zu klassischen Gegenstrom-Kontaktern wie strukturierten Packungen oder Füllkörperkolonnen braucht es deswegen kaum oder keine periodische Neuverteilung des Fluids respektive der Flüssigkeit. Auch dadurch lässt sich gegenüber den Kontaktern, die dem Stand der Technik entsprechen, das Bauvolumen in der Regel wesentlich reduzieren.

Vorzugsweise sind zwei Vorrichtungen derart angeordnet, dass das erste Ende der ersten Vorrichtung mit einem zweiten Ende einer zweiten Vorrichtung derart verbunden ist, dass das erste Fluid von der Struktur der ersten Vorrichtung in die Struktur der zweiten Vorrichtung geführt werden kann. Mehrere solcher Anordnungen können weiter parallel und/oder seriell geschaltet werden, womit die Leistung des Kontakters vergrössert werden kann. Damit können mehrere solcher Vorrichtungen in modularer Weise zu beliebig grossen Kontaktern verbaut werden.

In Varianten können die Vorrichtungen zum Beispiel auch ausschliesslich parallel angeordnet werden.

Ein Verfahren zur Herstellung einer obig beschriebenen Vorrichtung umfasst einen Aufbau mittels eines additiven Verfahrens. Damit können die Vorrichtungen besonders einfach aufgebaut werden. Vorzugsweise erfolgt der Aufbau direkt über Datenmodelle mittels eines chemischen oder physikalischen Vorgangs. Dem Fachmann sind eine Vielzahl an Methoden geläufig.

Vorzugsweise erfolgt der Aufbau der Vorrichtung in Schichten, welche kontinuierlich aufeinander aufgetragen werden. Damit kann die Vorrichtung in grossen Mengen kostengünstig hergestellt werden. Weiter können damit besonders einfach unterschiedliche Geometrien der Struktur und der Leisten erreicht werden. Solche Verfahren sind auch als 3D-Druckverfahren bekannt und können grundsätzlich mit beinahe beliebigen Materialien durchgeführt werden.

Mit dem schichtenweisen Aufbau von Körpern wie der obig beschriebenen Vorrichtung können sehr kleine Vorrichtungen realisiert werden. Die Leistenhöhen können zum Beispiel zwischen 50 bis einigen 100 Mikrometern betragen. Die Dimensionen der Kapillaren sind typischerweise durch den gewünschten Flüssigkeitsdurchsatz und die Viskosität der Flüssigkeit vorgegeben. Sie können sich im Bereich einiger 100 Mikrometer bis hin zu mehreren Millimetern bewegen. Zur Verarbeitung von niedrigviskosen Flüssigkeiten können so strukturierte Gegenstrom-Kontakter mit spezifischen Kontaktflächen von mehr als 1000 m²/m³ realisiert werden.

In Varianten kann auf den Schichtweisen Aufbau auch verzichtet werden. So können zum Beispiel einzelne Elemente der Vorrichtung hergestellt und anschliessend in einem weiteren Verfahrensschritt verbunden werden. Dem Fachmann sind auch dazu weitere Varianten bekannt.

Vorzugsweise wird nach dem Auftragen einer Schicht ein Verfestigungsvorgang durchgeführt. In diesem Schritt kann die Schicht zum Beispiel ausgehärtet werden. Eine ausgehärtete Schicht kann mit einer bereits bestehenden, unter Umständen bereits ausgehärteten Schicht durch den Verfestigungsvorgang einen Verbund eingehen.

Je nach gewähltem Material kann auf den Verfestigungsvorgang auch verzichtet werden. Weiter kann ein Verfestigungsvorgang auch jeweils nach dem Auftragen von mehr als einer Schicht vorgesehen sein.

Bevorzugt wird eine Schicht mittels einer Schablone aufgetragen. Die Schablone kann so ausgestaltet sein, dass sie als ebene Fläche über einer Druckplatte positionierbar ist. Ausnehmungen in der Schablone definieren typischerweise die Form der Schicht. Eine Schablone oder ein formgebendes Werkzeug kann eine Vielzahl identischer oder unterschiedlicher Formen für Schichten definieren. Insbesondere können Schablonen auch für gleiche Schichten verwendet werden, welche sich lediglich in der Position in der Ebene (Drehung, Verschiebung, Spiegelung) unterscheiden. Mit dem Verfahren können Schichten rasch und automatisiert aufgebaut werden. Dadurch eignet sich das Verfahren besonders gut für die Massenproduktion von Vorrichtungen. In einer besonderen Ausführungsform ist das formgebende Werkzeug ein Sieb, insbesondere ein Sieb für den technischen Siebdruck.

In Varianten kann auf die Schablone auch verzichtet werden. Zum Beispiel können die Zwischenräume mit einem entfernbaren Füllmaterial gefüllt sein. Sofern das Schichtmaterial eine ausreichend grosse Eigenstabilität aufweist, kann auch auf das Füllen der Zwischenräume verzichtet werden.

Vorzugsweise wird mit der Schablone eine plastisch verformbare Masse geformt, um eine Schicht bereitzustellen. Besonders geeignet sind Suspensionen. Diese können als Hauptbestandteil feinkörniges Pulver aufweisen. Geeignet sind unter anderem Metalle, Metalllegierungen sowie Keramiken und Glaskeramiken. Zur Bildung eines plastisch verformbaren Werkstoffs können insbesondere organische Binder zugegeben werden, zum Beispiel CMC (Carboxymethylcellulose), Polyolefin, Stärke (Maismehl, Weizenmehl etc.). Alternativ können als organische Binder verschiedene Typen von Photopolymeren eingesetzt werden. Es existiert eine grosse Zahl von unterschiedlichen Photopolymeren. Bevorzugt werden Acrylmonomere, wie unter anderem zum Beispiel Hexan-1,6-Diol-Diacrylat, Trimethylpropantriacrylat, Poly (Ethylen Glycol) Diacrylat, die mit geringen Mengen Photoinitiatoren wie unter anderem zum Beispiel 0.5% 2,2-Dimethoxy-2-Phenylacetophenone versetzt wurden, als Bindermaterial in Frage. Je nach Anforderungen können diese Monomere mit unterschiedlichen Oligomeren von Polyacrylaten gemischt werden.

Ist die plastisch verformbare Masse für einen Sinterschritt vorgesehen, was bei z. B. bei Keramiken, Metallen oder Glas der Fall ist, enthält sie vorzugsweise einen volumenmässig hohen Anteil des zu sinternden Pulvers, insbesondere von > 35 Volumenprozent, weiter insbesondere > 50 Volumenprozent.

In einer besonderen Ausführungsform weisen die plastisch verformbaren Massen zusätzliche Additive auf, welche verwendet werden können, um die rheologischen Eigenschaften der Masse zu ändern, wie zum Beispiel Dispersionshilfsmittel. Solche Zusätze sind dem Fachmann bekannt und können von ihm situativ an die erforderlichen Bedingungen angepasst ausgewählt werden (Journal of Engineering, Volume 2013 (2013), Article ID 930832).

In einer weiteren Ausführungsform umfasst die plastisch verformbare Masse reine Kunststoffteile. Diese können entsprechende Monomere und/oder Oligomere aufweisen, die später polymerisiert werden. Solche plastisch verformbare Massen können auch zusätzliche Additive zur Einstellung der rheologischen Eigenschaften, sowie Lösungsmittel, Pigmente, Katalysatoren oder Biozide enthalten.

In einer besonderen Ausführungsform kann die plastisch verformbare Masse Pulver eines Grundwerkstoffs als Suspension enthalten, ausgewählt aus der Gruppe bestehend aus: Metallen, Metallegierungen, Keramiken, Metall-Keramik-Verbundwerkstoffe, Glas, Kunststoffe und/oder Kunststoff-Verbundwerkstoffe mit Faserverstärkung oder Metall- oder Keramikpartikeln. Auch Gemische aus diesen Materialien sind denkbar.

Vorzugsweise wird auf eine Struktur ein Strombrecher aufgetragen. Besonders bevorzugt umfasst der Strombrecher mehrere aufgetragene Schichten. Der Strombrecher kann dabei entweder separat oder einstückig mit der Struktur aufgetragen werden. In einem bevorzugten Verfahren kann der Strombrecher mit unterschiedlichen Materialien aufgetragen werden, welche sich in der Benetzbarkeit unterscheiden. Somit kann ein erster Bereich der Strebe, welcher eine erste Benetzbarkeit aufweist und der Struktur zugewandt ist, mit einem ersten Material in einer oder mehreren Schichten aufgetragen werden, während eine oder mehrere nachfolgende Schichten aus einem zweiten Material aufgetragen werden, welche eine zweite, zur ersten unterschiedlichen Benetzbarkeit aufweisen.

Alternativ kann lediglich die Struktur schichtweise aufgebaut sein, während die Strombrecher im Anschluss mit der Struktur verbunden werden.

Vorzugsweise wird die Vorrichtung durch einen Verfestigungsvorgang, insbesondere durch Erwärmen oder Versintern, verfestigt. Wird als plastisch verformbare Masse ein Sintermaterial aus der oben geschilderten Gruppe verwendet, wie z. B. Metalle, Metalllegierungen, Keramik, Glas oder Verbunde dieser Materialien, so umfasst das erfindungsgemässe Verfahren besonders bevorzugt eine thermische Behandlung der aufgetragenen Schichten zur Sinterung, die nach dem Abschluss des formgebenden Prozesses des der aufgetragenen Schichten durchgeführt wird.

In einer bevorzugten Ausführungsform wird der Kontakter bei Temperaturen von zwischen 500 und 2500 °C, vorzugsweise zwischen 600 und 1700 °C gesintert.

In Varianten kann auf den Verfestigungsvorgang auch verzichtet werden, sofern es das verwendete Material erlaubt. Weiter kann der Verfestigungsprozess auch durch das Auslösen einer Polymerisation oder dergleichen erfolgen. Dem Fachmann sind dazu weitere Techniken bekannt.

Insbesondere erfolgt das Verfahren zur Herstellung der Vorrichtung vorzugsweise nach einem Verfahren gemäss der internationalen Patentanmeldung Nr. PCT/CH 2014/000177.

Vorzugsweise ist die Vorrichtung derart beschaffen, dass sie gereinigt werden kann. Besonders bevorzugt ist die Vorrichtung aus einer Keramik aufgebaut, so dass die Vorrichtung durch Erhitzen, insbesondere Ausbrennen gereinigt werden kann.

Alternativ kann die Vorrichtung auch zum einmaligen Gebrauch vorgesehen sein, insbesondere wenn die Vorrichtung im Gebrauch zum Beispiel chemisch angegriffen wird oder wenn nicht mehr entfernbare Rückstände entstehen.

Durch die Kombination aus sehr viel höheren möglichen Fluidgeschwindigkeiten und Durchsätzen beider Fluidströme sowie der sehr grossen möglichen spezifischen Oberfläche zwischen den Phasen ergibt sich eine Vorrichtung respektive Anordnung, bei der ein Stoffaustauschprozess mit sehr viel kleinerem Volumen durchgeführt werden kann. Speziell bei chemischen Anlagen, die auf schwimmenden Plattformen installiert sind, wie zum Beispiel FLNG Plattformen (Floating Liquefied Natural Gas), ist das Bauvolumen von enormer Bedeutung und teuer, so dass die vorliegend beschriebene Vorrichtung respektive Anordnung bei FLNG Plattformen besonders zu bevorzugen ist. Aber auch generell lassen sich durch das in dieser Anmeldung beschriebene Verfahren kostengünstige Anlagen realisieren. Der vorgestellte strukturierte Gegen- und Kreuzstrom-Fluid-Kontakter (die Vorrichtung respektive die Anordnung) kann bezüglich des benötigten Prozessvolumens um Faktoren kleiner ausgebildet sein als Apparate, die dem Stand der Technik entsprechen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Funktionsweise eines Kontakters;
- Fig. 2: eine schematische Darstellung einer ersten Ausführungsform, ausgebildet als Gegenstromkontakter;
- Fig. 3a: eine schematische Darstellung einer zweiten Ausführungsform, ausgebildet als Gegenstromkontakter;
- Fig. 3b: eine schematische Darstellung einer dritten Ausführungsform, ausgebildet als Gegenstromkontakter;
- Fig. 4: eine schematische Darstellung einer vierten Ausführungsform, mit treppenförmiger ausgebildeter Struktur;
- Fig. 5a: eine schematische Darstellung einer fünften Ausführungsform, ausgebildet als Kreuzstromkontakter;
- Fig. 5b: eine schematische Darstellung einer sechsten Ausführungsform, ausgebildet als Kreuzstromkontakter;
- Fig. 6: eine schematische Darstellung einer siebten Ausführungsform, ausgebildet als Wärmetauscher;
- Fig. 7: eine schematische Darstellung einer achten Ausführungsform, ausgebildet als Gegenstromkontakter mit angewinkelten Leisten;
- Fig. 8: eine schematische Darstellung einer ersten Ausführungsform eines Monolithen, mit Kanälen mit dreieckigem Querschnitt;
- Fig. 9: eine schematische Darstellung einer zweiten Ausführungsform eines Monolithen, mit Kanälen mit viereckigem Querschnitt;
- Fig. 10: eine schematische Darstellung einer dritten Ausführungsform eines Monolithen, mit Kanälen mit sechseckigem Querschnitt;
- Fig. 11a: eine schematische Darstellung eines aus mehreren Monolithstrukturen aufgebauten Kontakters, umfassend einen Flüssigkeitsverteiler und einen Flüssigkeitskollektor;
- Fig. 11b: einen Ausschnitt des Kontakters gemäss Figur 11a mit Fokus auf den Flüssigkeitsverteiler;
- Fig. 11c: einen Ausschnitt des Kontakters gemäss Figur 11a mit Fokus auf den Flüssigkeitskollektor;
- Fig. 12: schematisch die schichtweise Herstellung eines Kontakters; und
- Fig. 13: eine schematische Darstellung einer besonders bevorzugten Ausführungsform eines Monolithen aus Fig. 10 mit treppenförmig ausgebildeter Struktur zur Führung des ersten Fluids.

Grundsätzlich sind in den Figuren gleiche Teile mit gleichen Bezugszeichen versehen.

### Wege zur Ausführung der Erfindung

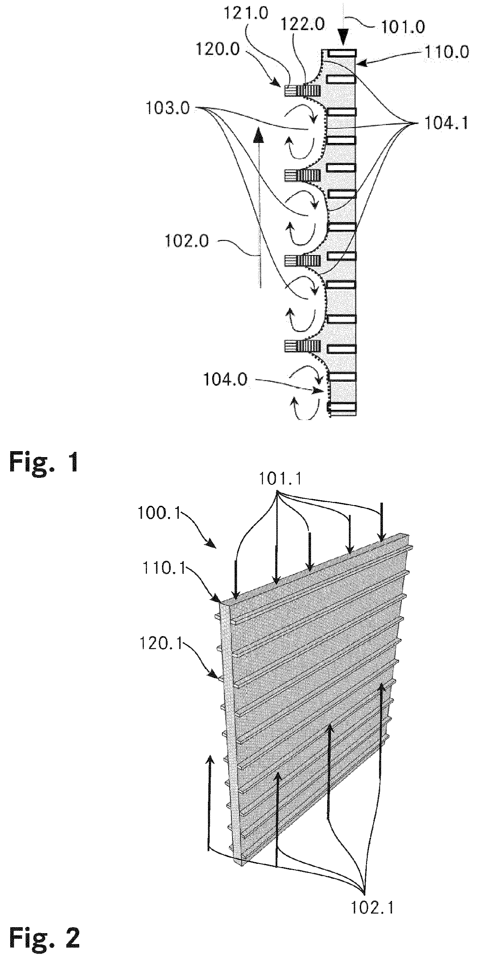

Die **Figur 1** zeigt eine schematische Darstellung einer Funktionsweise eines Kontakters 100.0. Der Kontakter 100.0 besteht im Wesentlichen aus einer Struktur 110.0 zum Führen eines ersten Fluids und Strömungsbrechern in der Form von mehreren parallel angeordneten Leisten 120.0. Die Leisten 120.0 sind mit der Struktur 110.0 verbunden. Im Bereich einer äusseren Oberfläche der Struktur 110.0 befindet sich die Kontaktzone 104.0, welche zum Führen eines zweiten Fluids ausgelegt ist und zur Kontaktierung des ersten Fluids mit dem zweiten Fluid. Die Struktur 110.0 kann in unterschiedlichen Weisen ausgebildet sein, wie nachfolgend an den zahlreichen Beispielen erläutert wird. Die Struktur 110.0 kann insbesondere aus Wänden, Kapillaren, Poren, Geweben bestehen, welche vorzugsweise durch das erste Fluid gut benetzbar sind.

Die Leisten 120.0 weisen jeweils einen der Struktur zugewandten Bereich auf, welcher durch das erste Fluid gut benetzbar ist. Weiter weisen die Leisten 120.0 jeweils einen von der Struktur abgewandten Bereich auf, welcher durch das erste Fluid nur schwer benetzbar ist. Damit soll das erste Fluid vom Bereich, in dem das zweite Fluid mit grosser Geschwindigkeit in entgegengesetzter Richtung fliesst, ferngehalten werden, da das erste Fluid dort vom zweiten Fluid mitgerissen werden könnte. Statt der unterschiedlichen Benetzbarkeiten können auch andere Eigenschaften der Leisten, insbesondere deren Formgebung, Abrisskanten und dergleichen vorgesehen sein.

Im Betrieb wird jeweils ein erstes Fluid, insbesondere eine Flüssigkeit in einer ersten Richtung 101.0 durch die Struktur geführt. Das zweite Fluid, insbesondere ebenfalls eine Flüssigkeit oder auch ein Gas, ein Dampf etc. wird entlang der in der Kontaktzone 104.0 gebildeten Phasengrenzfläche 104.1 über die mehreren Leisten 120.0 in einer zweiten Richtung 102.0 geführt. Die dabei gebildete Phasengrenze oder Grenzfläche 104.1 zwischen den beiden Fluiden ist in Figur 1 durch eine unterbrochene Linie angedeutet und weist z.B. wie dargestellt eine gekrümmte Form auf. In der Veranschaulichung gemäss Figur 1 sind die Richtungen 101.0 und 102.0 entgegengesetzt, was einem Gegenstrom entspricht. In den nachfolgenden Beispielen werden weitere mögliche Strömungsrichtungen der beiden Fluide zueinander aufgezeigt. In den Bereichen zwischen den Leisten 120.0 kommt das zweite Fluid in Kontakt mit dem ersten Fluid. Die beiden Fluide können in diesem Bereich Energie oder Stoff austauschen. Im vorliegenden Fall weist der Abstand zwischen den benachbarten Leisten und die Höhen der Leisten ein Verhältnis von ungefähr 5:2 auf. Das zweite Fluid weist daher zwischen den Leisten 120.0 eine deutlich reduzierte Fliessgeschwindigkeit auf. Durch die Verwirbelung weist das zweite Fluid zwischen den Leisten 120.0 zudem im Vergleich zur Fliessrichtung ausserhalb der Leisten 120.0 eine stark geänderte Fliessrichtung auf. Damit wird wiederum zwischen den Leisten 120.0 im Idealfall lokal eine Gleichstromkontaktierung an der freien Oberfläche zwischen dem ersten und dem zweiten Fluid erzeugt, womit schliesslich ein Fluten weitgehend verhindert werden kann.

Die **Figur 2** zeigt eine schematische Darstellung einer ersten Ausführungsform eines Kontakters 100.1, ausgebildet als Gegenstromkontakter. Der Kontakter 100.1 besteht im Wesentlichen aus einer Struktur 110.1 und Strömungsbrechern in der Form von mehreren parallel angeordneten Leisten 120.1. Die Struktur 110.1 ist vorliegend im Wesentlichen plattenförmig ausgebildet und besteht aus einem Gewebe oder einem offenporigen Schaum, durch welchen das erste Fluid in der Richtung 101.1 fliessen kann. Die Leisten 120.1 sind in regelmässigen Abständen mit der Struktur 110.1 verbunden. Ein Verhältnis zwischen den Leistenabständen und der Leistenhöhe beträgt vorliegend ungefähr 5:1. Die Struktur 110.1 weist beidseitig Leisten 120.1 auf, wobei sich paarweise zwei Leisten 120.1 bezüglich der Struktur 110.1 gegenüberstehen. Das zweite Fluid fliesst in der Richtung 102.1 im Wesentlichen entgegen gesetzt zum ersten Fluid. Das zweite Fluid ist beidseitig der Struktur 100.2 über die Stege geführt, so dass beidseitig eine Kontaktierung zwischen den beiden Fluiden erreicht werden kann.

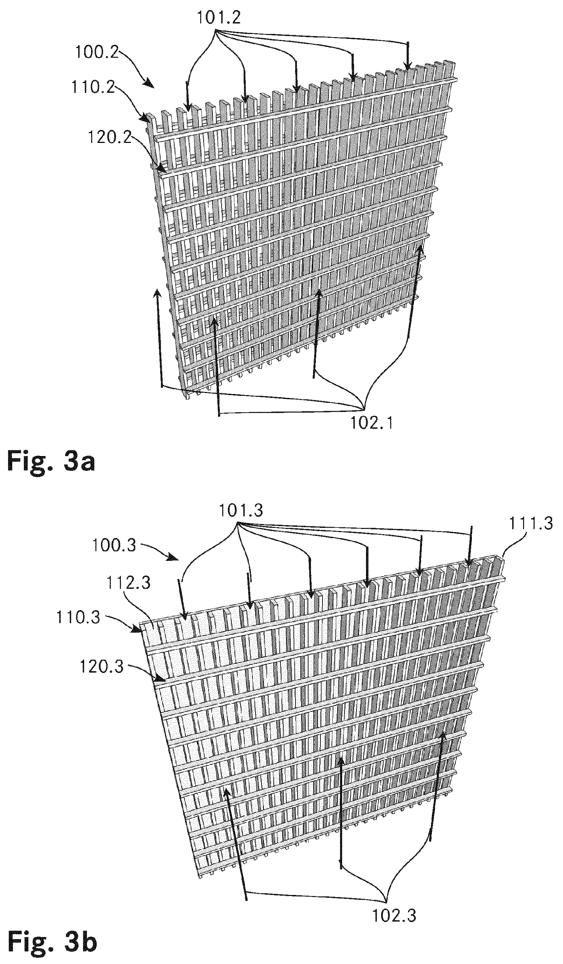

Die **Figur 3a** zeigt eine schematische Darstellung einer zweiten Ausführungsform, eines Kontakters 100.2 ausgebildet als Gegenstromkontakter. Der Kontakter 100.2 besteht im Wesentlichen aus einer Struktur 110.2 und Strömungsbrechern in der Form von mehreren parallel angeordneten Leisten 120.2. Die Struktur 110.2 ist wiederum im Wesentlichen plattenförmig ausgebildet und umfasst eine Reihe parallel angeordneter Stege 111.2, zwischen welchen beidseitig offene Kapillaren gebildet sind. Die Leisten 120.2 sind mit der Struktur 110.2 verbunden. Die Leisten 120.2 sind jeweils rechtwinklig zu den Stegen 111.2 angeordnet. Die Struktur 100.2 weist wiederum beidseitig Leisten 120.2 auf, welche sich paarweise bezüglich der Struktur 100.2 gegenüberstehen. Ein Verhältnis zwischen den Leistenabständen und der Leistenhöhe beträgt vorliegend ungefähr 6:1. Das erste Fluid fliesst in der Richtung 101.2 zwischen den Stegen 111.2 durch die Struktur 110.2, während das zweite Fluid rechtwinklig zu den Leisten 120.2 und damit parallel zu den Stegen 111.2 geführt ist. Das zweite Fluid ist beidseitig der Struktur 100.2 über die Stege geführt, so dass beidseitig eine Kontaktierung zwischen den beiden Fluiden erreicht werden kann.

Die **Figur 3b** zeigt eine schematische Darstellung einer dritten Ausführungsform eines Kontakters 100.3, ausgebildet als Gegenstromkontakter. Der Kontakter 100.3 besteht im Wesentlichen aus einer Struktur 110.3 und Strömungsbrechern in der Form von mehreren parallel angeordneten Leisten 120.3. Im Unterschied zum Kontakter 100.2 weist vorliegend die Struktur 110.3 lediglich einseitig offene Kapillaren auf, welche durch die Stege 111.3 gebildet sind. Während eine erste Seite der Struktur 100.3 analog zur Struktur 100.2 mit Leisten 120.3 verbunden ist, ist die gegenüberliegende zweite Seite der Struktur 100.3 mit einer Platte 112.3 verbunden. Ein Verhältnis zwischen den Leistenabständen und der Leistenhöhe beträgt vorliegend ungefähr 5:1. Das zweite Fluid ist damit ausschliesslich über die erste Seite in der Richtung 102.3 geführt.

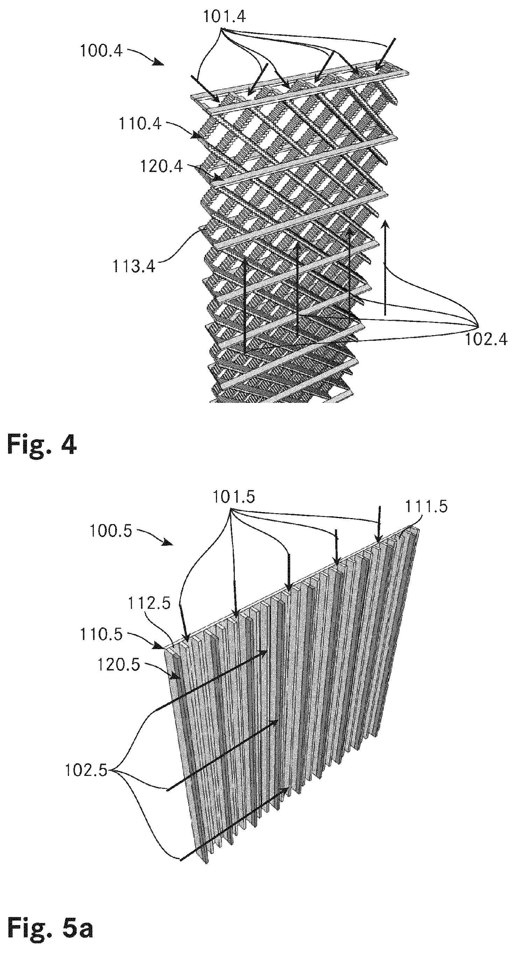

Die **Figur 4** zeigt eine schematische Darstellung einer vierten Ausführungsform eines Kontakters 100.4, mit treppenförmiger ausgebildeter Struktur. Der Kontakter 100.4 besteht im Wesentlichen aus einer Struktur 110.4 und Strömungsbrechern in der Form von mehreren parallel angeordneten Leisten 120.4. Die Struktur 110.4 umfasst eine Vielzahl an länglichen, treppenförmigen Elementen 113.4. Diese sind in zwei Schichten aufgebaut. In einer ersten Schicht sind die Elemente 113.4 parallel zueinander in gleichmässigem Abstand derart angeordnet, dass die Treppenstufen der Elemente 113.4 einander zugewandt sind. Die zweite Schicht ist identisch aufgebaut. Die beiden Schichten sind nun derart angeordnet, dass die Treppenseiten einander kontaktieren und die Elemente 113.4 der ersten Schicht ungefähr rechtwinklig zu den Elementen 113.4 der zweiten Schicht orientiert sind. Ein Abstand zwischen zwei benachbarten Elementen 113.4 einer Schicht beträgt ungefähr einen Drittel des Abstandes zwischen zweier benachbarter Leisten 120.4. Die Leisten 120.4 sind wiederum beidseitig an der Struktur 110.4 angeordnet, wobei sich jeweils zwei Leisten 120.4 bezüglich der Struktur 110.4 gegenüber stehen. Die Elemente 113.4 schliessen mit den Leisten 120.4 jeweils einen Winkel von ungefähr 45° ein. Ein Verhältnis zwischen den Leistenabständen und der Leistenhöhe beträgt vorliegend ungefähr 7:1. Das erste Fluid wird in den beiden Ebenen der Struktur in der Ebene 101.4 geführt. Das erste Fluid wird in der einen Ebene ungefähr in einem Winkel von 45° zu den Leisten geführt und in der anderen Ebene ungefähr in einem Winkel von -45° respektive 315° geführt. Im Mittel fliesst das erste Fluid trotzdem in entgegengesetzter Richtung als das zweite Fluid. Damit handelt es sich beim Kontakter 100.4 um einen Gegenstromkontakter.

Die **Figur 5a** zeigt eine schematische Darstellung einer fünften Ausführungsform eines Kontakters 100.5, wiederum ausgebildet als Kreuzstromkontakter. Der Kontakter 100.5 besteht im Wesentlichen aus einer Struktur 110.5 und Strömungsbrechern in der Form von mehreren parallel angeordneten Leisten 120.5. Die Struktur 110.5 ist identisch aufgebaut wie die Struktur 110.3, wobei mehrere parallele Stege 111.5 auf einer Rückwand 112.5 angeordnet sind. Gegenüber dem Kontakter 100.3 sind aber vorliegend die Leisten 120.5 jeweils parallel zu und auf einem Steg 111.5 angeordnet. Vorliegend ist jeder dritte Steg 111.5 mit einer Leiste 120.5 versehen. Dem Fachmann ist aber klar, dass auch jeder zweite, jeder vierte, jeder fünfte etc. Steg 111.5 mit einer Leiste 120.5 versehen sein könnte. Ein Verhältnis zwischen den Leistenabständen und der Leistenhöhe beträgt vorliegend ungefähr 7:1. Während das erste Fluid zwischen den Stegen 111.5 in Richtung 101.5 geführt ist, ist das zweite Fluid in der Richtung 102.5 sowohl rechtwinklig zu den Leisten 120.5 als auch rechtwinklig zu der Richtung 101.5 geführt.

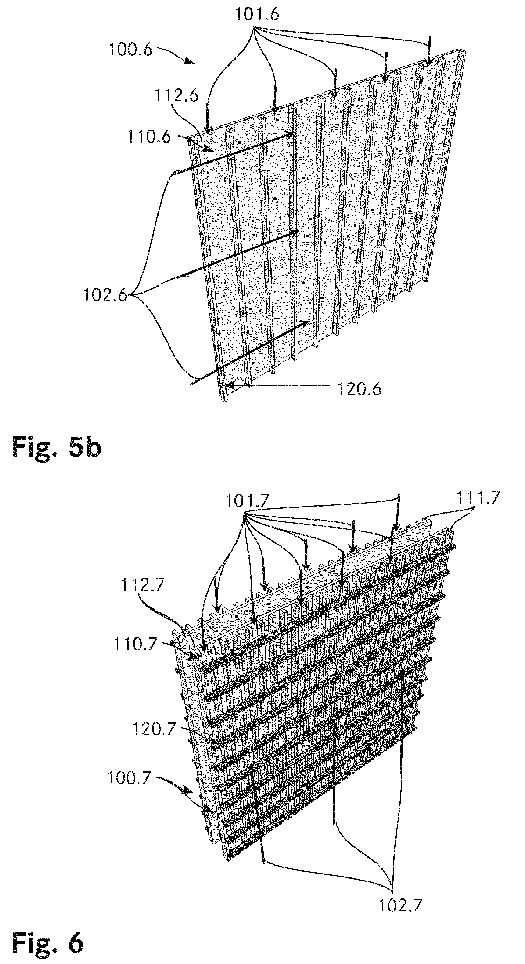

Die **Figur 5b** zeigt eine schematische Darstellung einer sechsten Ausführungsform eines Kontakters 100.6, ausgebildet als Kreuzstromkontakter. Der Kontakter 100.6 besteht im Wesentlichen aus einer Struktur 110.6 und Strömungsbrechern in der Form von mehreren parallel angeordneten Leisten 120.6. Vorliegend weist die Struktur 110.6 lediglich die Platte 112.6, zum Beispiel gemäss dem Kontakter 100.5, auf. Die Platte 112.6 kann als Gewebe oder ebene Platte vorliegen. Die Leisten 120.6 sind parallel zueinander auf der Platte 112.6 angeordnet. Ein Verhältnis zwischen den Leistenabständen und der Leistenhöhe beträgt vorliegend ungefähr 6:1. Das erste Fluid ist vorliegend als ein Film auf der Platte 112.6 zwischen den Leisten 120.6 in Richtung 101.6 geführt. Das zweite Fluid ist rechtwinklig zu den Leisten 120.6 und rechtwinklig zur Richtung 101.6, nämlich in Richtung 102.6 geführt.

Die **Figur 6** zeigt eine schematische Darstellung einer siebten Ausführungsform, ausgebildet als Wärmetauscher umfassend zwei Kontakter 100.3 gemäss Figur 3b. Im Wesentlichen handelt es sich dabei um eine weitere Anwendungsmöglichkeit für einen Kontakter gemäss Figur 3b. Die beiden Kontakter sind derart angeordnet, dass die beiden Platten 112.7 einen Zwischenraum definieren, durch welchen ein Wärmeträgermedium fliessen kann.

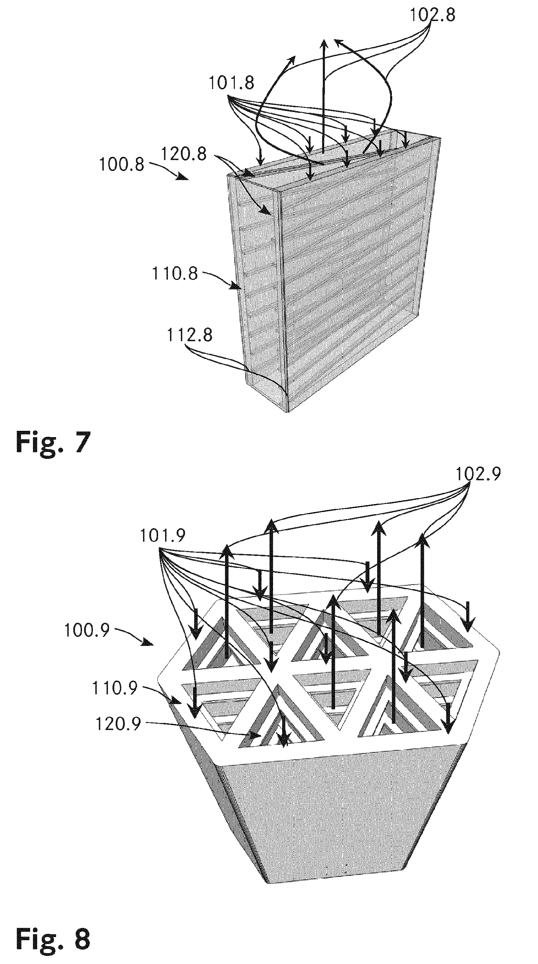

Die **Figur 7** zeigt eine schematische Darstellung einer achten Ausführungsform eines Kontakters 100.8, ausgebildet als Gegenstromkontakter mit angewinkelten Leisten. Der Kontakter 100.8 besteht im Wesentlichen aus einer Struktur 110.8 und Strömungsbrechern in der Form von mehreren parallel angeordneten Leisten 120.8. Die Struktur 110.8 umfasst eine Platte 112.8 mit darauf parallel angeordneten Leisten, welche bezüglich einer Fliessrichtung 101.8 des ersten Fluids um einen Winkel von ungefähr 5 bis 10° geneigt sind. Die Struktur 100.8 weist weiter eine zweite Platte 112.8 mit identisch angeordneten Leisten 120.8 auf. Die beiden Platten 112.8 stehen sich mit den zugewandten Leisten 120.8 derart gegenüber, dass eine Richtung der Leisten 120.8 der einen Platte 112.8 eine Richtung der Leisten 120.8 der zweiten Platte 112.8 kreuzen. Die Leisten 120.8 der ersten und der zweiten Platte 112.8 sind zueinander beabstandet und bilden damit einen Fliessraum für das zweite Fluid. Das zweite Fluid fliesst in Richtung 102.8 und damit entgegen gesetzt zur Richtung 101.8 des ersten Fluids. Durch die Ausrichtung der Leisten 120.8 wird in die Strömung des zweiten Fluids eine Rotationsbewegung um eine Achse in Richtung 102.8 induziert, womit eine Durchmischung im zweiten Fluid intensiviert werden kann.

Die oben aufgeführten Kontakter können nun derart modular zusammengebaut werden, dass eine grössere Monolithstruktur erreicht wird. Es folgen drei Beispiele eines Monolithen ausgebildet aus einer Vielzahl an Kontaktern gemäss der obigen Beschreibung.

Die **Figur 8** zeigt eine schematische Darstellung einer ersten Ausführungsform eines Monolithen 100.9, mit Kanälen mit dreieckigem Querschnitt. Der Monolith 100.9 besteht im Wesentlichen aus einer Struktur 110.9 und Strömungsbrechern in der Form von mehreren parallel angeordneten Leisten 120.9. Die Struktur besteht vorliegend aus einem offenporigen Material, welches in einer Fliessrichtung 101.9 des ersten Fluids eine Vielzahl paralleler Kanäle aufweist, durch welche das zweite Fluid im Gegenstrom zum ersten Fluid geführt ist. Vorliegend weisen die Kanäle einen dreieckigen Querschnitt auf. Innerhalb der Kanäle sind rechtwinklig zur Fliessrichtung 101.9 in regelmässigen Abständen nach innen ragende und umlaufende Leisten 120.9 angeordnet.

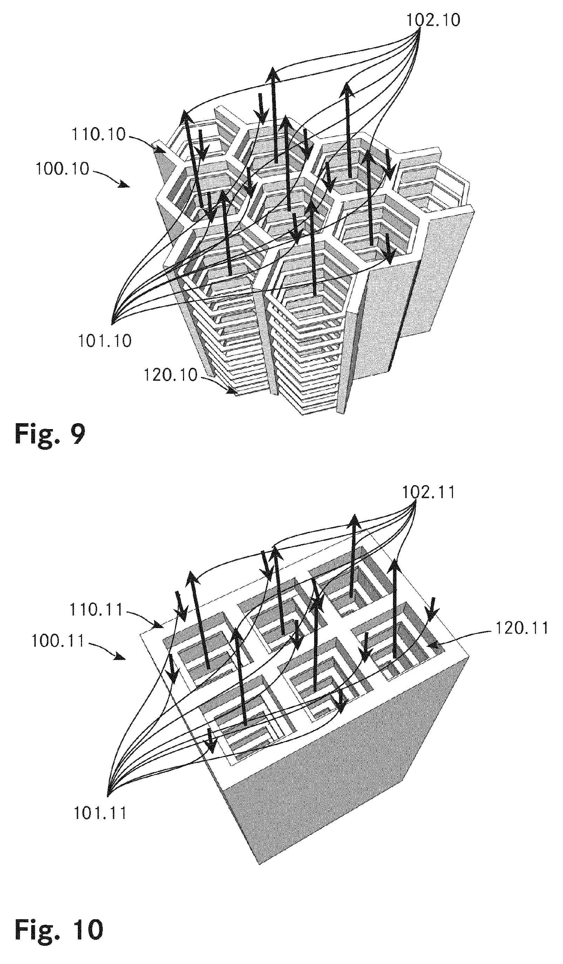

Die **Figur 9** zeigt eine schematische Darstellung einer zweiten Ausführungsform eines Monolithen 100.10, mit Kanälen mit viereckigem Querschnitt. Der Monolith 100.10 ist im Wesentlichen identisch aufgebaut, wie der Monolith 100.9, wobei aber die Kanäle einen sechseckigen Querschnitt aufweisen und damit wabenförmig ausgebildet sind. Innerhalb der Kanäle sind wiederum rechtwinklig zur Fliessrichtung 101.10 in regelmässigen Abständen nach innen ragende und umlaufende Leisten 120.10 angeordnet.

Die **Figur 10** zeigt eine schematische Darstellung einer dritten Ausführungsform eines Monolithen 100.11, mit Kanälen mit sechseckigem Querschnitt. Der Monolith 100.11 ist im Wesentlichen identisch aufgebaut, wie der Monolith 100.9, wobei aber die Kanäle einen viereckigen Querschnitt aufweisen. Innerhalb der Kanäle sind wiederum rechtwinklig zur Fliessrichtung 101.11 in regelmässigen Abständen nach innen ragende und umlaufende Leisten 120.11 angeordnet.

Dem Fachmann ist klar, dass die Kanäle der Monolithen auch anders geformte Querschnittsflächen aufweisen können, zum Beispiel fünfeckig, rund, rechteckig, schlitzförmig etc.

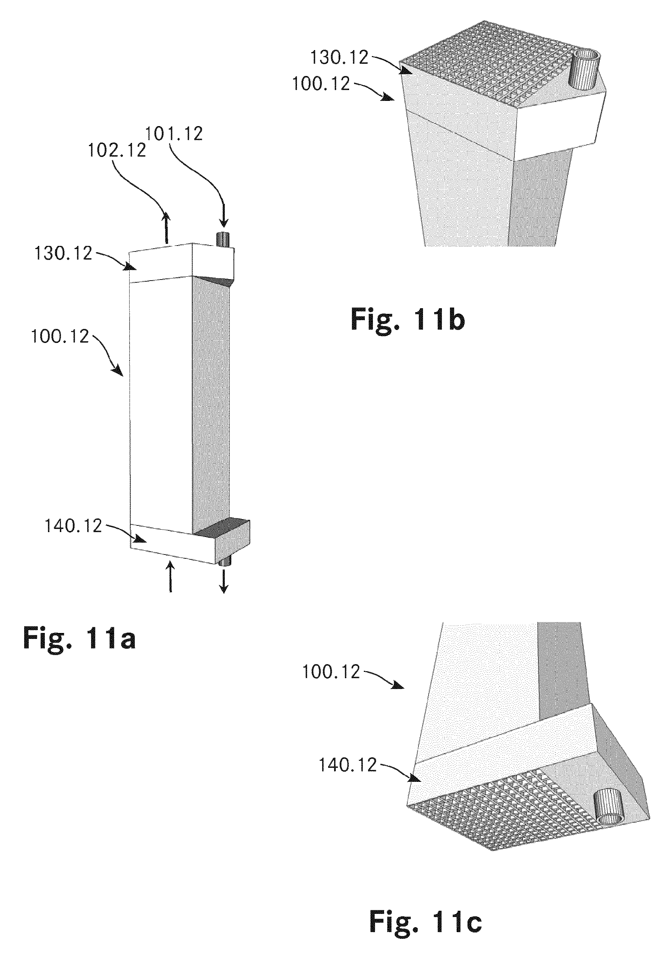

Die **Figur 11a** zeigt eine schematische Darstellung eines Monolithen 100.12 gemäss einer der Figuren 8 bis 10 oder 13, umfassend einen Flüssigkeitsverteiler 130.12 und einen Flüssigkeitskollektor 140.12. Der Flüssigkeitsverteiler 130.12 ist derart mit einem Ende des Monolithen 100.12 verbunden, dass ein in Richtung 101.12 in den Eintritt des Flüssigkeitsverteilers 130.12 fliessendes erstes Fluid in die Struktur des Monolithen 100.12 gelangt und durch diese hindurchfliessen kann. Am gegenüberliegenden Ende des Monolithen ist ein vorliegend identisch mit dem Flüssigkeitsverteiler 130.12 aufgebauter Flüssigkeitskollektor 140.12 derart angeordnet, dass das erste Fluid nach dem Austritt aus der Struktur des Monolithen 100.12 wieder gesammelt und über ein Abflussrohr abgelassen werden kann. Sowohl der Flüssigkeitsverteiler 130.12 als auch der Flüssigkeitskollektor 140.12 weisen eine Vielzahl an Öffnungen auf, welche in Kommunikation mit den obig beschriebenen Kanälen des Monolithen 100.12 sind, so dass das zweite Fluid durch den Flüssigkeitsverteiler 130.12 in die Kanäle gelangen und aus den Kanälen durch den Flüssigkeitskollektor 140.12 wieder abgeführt werden kann.

Die Figur 11 b zeigt einen Ausschnitt des Kontakters 100.12 gemäss Figur 11 a mit Fokus auf den Flüssigkeitsverteiler 130.12.

Die Figur 11 c zeigt einen Ausschnitt des Kontakters 100.12 gemäss Figur 11a mit Fokus auf den Flüssigkeitskollektor 140.12.

In einer bevorzugten Ausführungsform kann die Struktur aus Aluminiumoxid bestehen und ist damit sehr gut benetzbar, während die Leisten innen, das heisst in Richtung der Struktur Aluminiumoxid und aussen Cerium-Dioxid umfasst, wobei letzteres schlecht benetzbar ist. Dem Fachmann sind auch weitere geeignete Materialien respektive Beschichtungen bekannt, womit ein Kontakter hergestellt werden kann.

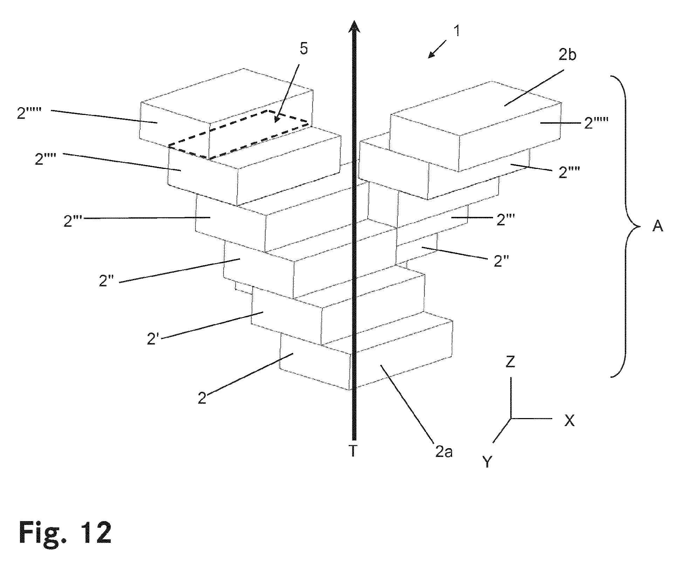

Die **Figur 12** zeigt schliesslich eine schematische Darstellung eines schichtweisen Aufbaus eines Kontakters 1. Der Kontakter 1 hat zwei Treppenelemente 2a, 2b. Das erste Treppenelement 2a verläuft von rechts unten nach links oben, während das zweite Treppenelement 2b von links unten nach rechts oben verläuft und in der Ebene hinter dem ersten Treppenelement 2a angeordnet ist. Die generelle Strömungsrichtung T verläuft von unten nach oben. Die Einteilung unten/oben wurde willkürlich gewählt, dient nur der Erläuterung der Figur und steht nicht in einem funktionalen Zusammenhang zum Kontakter 1. Die generelle Strömungsrichtung T gibt an, dass ein Fluid, welches den Kontakter 1 durchströmt, im vorliegenden Beispiel am unteren Ende, dem Eintrittsende 10 des Kontakter 1 einen ersten Kontakt mit dem Kontakter 1 hat, und am oberen Ende des Kontakters 1 am Austrittsende 11, diesen wieder verlässt. Die Treppenelemente 2a, 2b werden durch eine Vielzahl von Schichten 2, 2', 2", 2"', 2"", 2""' gebildet, welche den Treppenelementen 2a, 2b eine insgesamt treppenförmige Struktur geben. Dabei wird eine erste Schicht 2 von einer zweiten Schicht 2' teilweise überlappt, welche wiederum von einer dritten Schicht 2" teilweise überlappt wird. Der Grad an Überlappung, d. h. zum Beispiel der Flächenanteil einer Treppenstufe der ersten Schicht 2 der stoffschlüssig ist mit dem Flächenanteil der zweiten Schicht 2', ist im vorliegenden Beispiel im ganzen Kontakter 1 konstant. Die einzelnen Schichten 2, 2', 2", 2"', 2"", 2""' bilden sowohl die Treppenstufen des ersten Treppenelements 2a wie auch des zweiten Treppenelements 2b. Im vorliegenden Beispiel liegt der Grad an Überlappung bei ca. 50 %, d.h. 50 % der Oberfläche einer Schicht welche senkrecht zur Hauptströmungsrichtung steht, befindet sich in stoffschlüssigen Kontakt mit einer benachbarten Schicht. Im vorliegenden Beispiel entspricht zudem die Dicke der Schicht, d.h. die Flächen die parallel zur Hauptströmungsrichtung T liegen, der freibleibenden, nicht von der nachfolgenden Schicht überlappten Fläche. Die jeweils überlappenden Flächenanteile einer Schicht bilden eine Verbundfläche 5. Die Verbundfläche 5 ist im fertigen Kontakter 1 stoffschlüssig verbunden.

Am Beispiel der Schicht 2"" der Treppenelemente 2a, 2b erläutert heisst dies, dass beide Treppenstufen, welche in der Schicht 2"" oder Flächenausdehnung der Ausdehnungsachsen X, Y liegen, eine gemeinsame Schicht bilden. Zwischen den Treppenstufen der Treppenelemente 2a, 2b in der Schicht 2"" sind Aussparungen 12. Die beispielhaft gezeigten Treppenelemente 2a, 2b verlaufen gegenseitig zueinander und kreuzen sich bei einem Winkel von 90°, berechnet von einer jeweiligen gedachten Mittelachse durch alle Kanten der Treppen eines Treppenelements 2a, 2b.

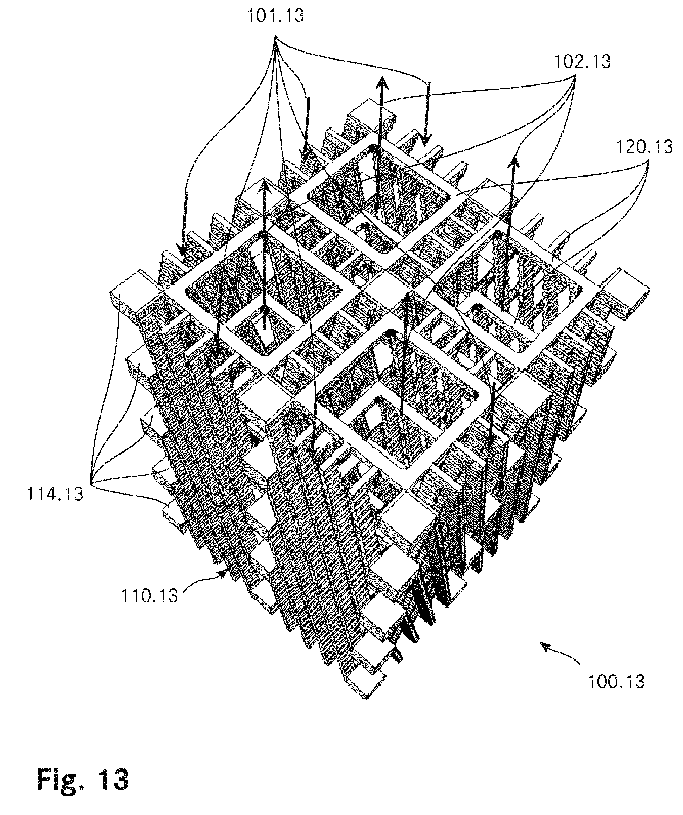

Die **Figur 13** zeigt eine schematische Darstellung eines weiteren Kontakters bzw. eines weiteren Monolithen 100.13. Der weitere Monolith 100.13 stellt eine besonders bevorzugte Ausführungsform des in Figur 10 in allgemeiner Form dargestellten Monolithen 100.11 dar. Die Kanäle, in welchen das zweite Fluid geführt wird, weisen ebenfalls einen viereckigen Querschnitt auf. Innerhalb der Kanäle sind wiederum im Wesentlichen rechtwinklig zur Fliessrichtung 101.13 des ersten Fluids bzw. in Fliessrichtung des zweiten Fluids 102.13 in regelmässigen Abständen nach innen ragende und umlaufende Leisten 120.13 angeordnet. Beim Monolithen 100.13 ist die Struktur 110.13 zur Führung des ersten Fluids als treppenförmige Struktur ausgebildet, analog zur Ausführungsform, welche in Figur 4 gezeigt ist. Die Monolithstruktur 100.13 wird dabei erzeugt, indem ein Netzwerk aus mehreren rechtwinklig zueinander stehenden treppenförmigen Teilstruktureinheiten jeweils im Bereich der umlaufenden Leisten 120.13 über quaderförmige und in den Fliessrichtungen 101.13 bzw. 102.13 in regelmässigen Abständen angeordnete Verbindungselemente 114.13 miteinander verbunden werden. Die kurzen Kanten der Verbindungselemente 114.13 fallen dabei mit den kurzen Kanten der umlaufende Leisten 120.13 zusammen.

Die vorstehend beschriebenen Ausführungsformen sind jedoch nur als illustrative Beispiele zu verstehen, welche im Rahmen der Erfindung beliebig abgewandelt werden können.

Der in Fig. 1 gezeigte Kontakter 1 kann z.B. auch als Vielfaches hergestellt werden, wobei ein grösserer Kontakter 1 mit mehr Treppenelementen 2a, 2b erzeugt wird. Ein solches Element kann zum Beispiel als Intervall A beliebig wiederholt werden, auch in anderer Grundausrichtung, um so einen grösseren Kontakter 1 zu erzeugen.

Die Schichtdicken der in der Fig. 1 exemplarisch gezeigten Schichten 2, 2', 2", 2"', 2"", 2""' können sich zwischen 30 µm und 10 mm bewegen. Das vorliegende Beispiel hat Schichtdicken der Schichten 2, 2', 2", 2"', 2"", 2""' von 500 µm.

In Fig. 2 kann das Gewebe bzw. der offenporige Schaum auch als geordnetes Kapillarsystem, zum Beispiel in Form von Treppenstegen wie sie in Fig. 4 gezeigt sind, ausgebildet sein. Ebenso kann das offenporige Material mit zufälliger Struktur aus den Fig. 8, 9 und 10 durch eine geordnete Struktur mit regelmässig angeordneten Kapillaren und/oder Treppenstegen ersetzt werden.

Zusammenfassend ist festzustellen, dass erfindungsgemäss eine Vorrichtung geschaffen wird, womit besonders effizient zwei Fluide in Kontakt gebracht werden können und womit ein Risiko des Flutens verringert werden kann.

## Patentansprüche

1. Vorrichtung, insbesondere ein Kontakter zum Kontaktieren von wenigstens zwei Fluidströmen, umfassend eine Struktur (100.0) zur Führung eines ersten Fluids, wobei die Struktur (100.0) weiter eine Kontaktzone aufweist, wobei die Kontaktzone zum Führen eines zweiten Fluids ausgelegt ist und wobei in der Kontaktzone das erste Fluid mit dem zweiten Fluid in Kontakt gebracht werden kann, **dadurch gekennzeichnet, dass** in der Kontaktzone (100.0) mindestens ein Strömungsbrecher (120.0) zum Brechen einer Strömung des zweiten Fluids angeordnet ist.

2. Vorrichtung nach Anspruch 1, **dadurch gekennzeichnet, dass** der Strömungsbrecher (120.0) mindestens zwei Leisten (120.0) umfasst, wobei das zweite Fluid insbesondere in eine zweite Richtung strömen kann, welche die Leistenrichtung kreuzt.

3. Vorrichtung nach Anspruch 1 oder 2, **dadurch gekennzeichnet, dass** die Struktur (100.0) derart beschaffen ist und die Strömungsbrecher (120.0) derart angeordnet sind, dass das erste Fluid in eine erste Richtung strömen kann, welche eine Strömungsbrecherrichtung kreuzt.

4. Vorrichtung nach Anspruch 3, **dadurch gekennzeichnet, dass** die erste Richtung mit der Leistenrichtung einen Winkel von 60° bis 90°, insbesondere einen Winkel von 75° bis 90°, vorzugsweise einen Winkel von 80° bis 90° einschliesst.

5. Vorrichtung nach einem der Ansprüche 1 bis 4, **dadurch gekennzeichnet, dass** die Leiste (120.0) einen zur Struktur proximaler Bereich (122.0) umfasst, welcher eine erste Benetzbarkeit aufweist und wobei die Leiste (120.0) einen zur Struktur distalen Bereich (121.0) umfasst, welcher eine zur ersten Benetzbarkeit unterschiedliche, zweite Benetzbarkeit aufweist.

6. Vorrichtung nach einem der Ansprüche 1 bis 5, **dadurch gekennzeichnet, dass** die Struktur (100.0) ein oder mehrere der folgenden Merkmale umfasst:
e) ein Gewebe;
f) ein offenporiges Material, insbesondere ein Schaum;
g) Kapillaren;
h) Treppenstruktur.

7. Vorrichtung nach einem der Ansprüche 1 bis 6, **dadurch gekennzeichnet, dass** die Struktur (100.0) wabenförmig ausgebildet ist, wobei die Strömungsbrecher (120.0) in den Waben radial nach innen ragen.

8. Vorrichtung nach Anspruch 7, **dadurch gekennzeichnet, dass** die Waben einen Querschnitt der Form eines regelmässigen Vielecks aufweisen, insbesondere eines Dreiecks, eines Vierecks oder eines Sechsecks.

9. Vorrichtung nach einem der Ansprüche 1 bis 8, **dadurch gekennzeichnet, dass** die Struktur (100.0) Treppenstegelemente umfasst.

10. Vorrichtung nach Anspruch 9, **dadurch gekennzeichnet, dass** die Struktur (100.0) mehrere kreuzförmig angeordnete Treppenstegelemente umfasst.

11. Anordnung umfassend mindestens eine Vorrichtung nach einem der Ansprüche 1 bis 10, wobei an einem ersten Ende der Vorrichtung ein Verteiler zum Verteilen des ersten Fluids in die Struktur angeordnet ist und an einem zweiten, dem ersten gegenüberliegenden Ende, ein Kollektor zum Sammeln des ersten Fluids aus der Struktur angeordnet ist.

12. Anordnung nach Anspruch 11, **dadurch gekennzeichnet, dass** zwei Vorrichtungen derart angeordnet sind, dass das erste Ende der ersten Vorrichtung mit einem zweiten Ende einer zweiten Vorrichtung derart verbunden ist, dass das erste Fluid von der Struktur der ersten Vorrichtung in die Struktur der zweiten Vorrichtung geführt werden kann.

13. Verfahren zur Herstellung eines Kontaktes zwischen einem ersten Fluid und einem zweiten Fluid, unter Verwendung einer Vorrichtung nach einem der Ansprüche 1 bis 10.

14. Verfahren nach Anspruch 13, **dadurch gekennzeichnet, dass** das zweite Fluid durch die Strömungsbrecher (120.0) verwirbelt wird, womit insbesondere lokal eine Gleichstromkontaktierung zwischen dem ersten Fluid und dem zweiten Fluid erreicht wird.

15. Verfahren nach Anspruch 13 oder 14, **dadurch gekennzeichnet, dass** die Strömungsgeschwindigkeit des zweiten Fluids derart gewählt ist, dass ein Fluten ausbleibt.
